# EUROPEAN PATENT APPLICATION

(11) **EP 3 151 574 A1**
(43) Date of publication of application: **05.04.2017**
(21) Application number: 14893357.5
(22) Date of filing: 10.12.2014
(51) Int. Cl.: H04N 21/422, H04N 21/436

(54) **SYSTEM AND METHOD FOR MAINTAINING CONNECTION CHANNEL IN MULTI-DEVICE INTERWORKING SERVICE**

(30) Priority: 27.05.2014 CN 201410228743
(71) Applicant: Institute of Acoustics, Chinese Academy of Sciences, Haidian District Beijing 100190 (CN); Shanghai 3NTV Network Technology Co. Ltd., Shanghai 200072 (CN)
(72) Inventor: LI, Yanxia, Beijing 100190 (CN); WANG, Jinlin, Beijing 100190 (CN); DANG, Shoujiang, Beijing 100190 (CN); LIU, Xue, Beijing 100190 (CN)
(74) Representative: Walsh, Marie Goretti
(86) International application number: PCT/CN2014/093467
(87) International publication number: WO 2015/180446

(57) **Abstract**

The present invention provides a system and a method for maintaining a connection channel in a multi-device interworking service. The system comprises: a multi-screen channel control client module and a multi-screen channel control server module. The multi-screen channel control client module is located on each terminal device, and used for acquiring an identifier of the device terminal and reporting a binding relationship between the terminal and a multi-screen channel to the multi-screen channel control server. The multi-screen channel control server module is used for recording the binding relationship between the terminal and the multi-screen channel, and pushing services to the bound terminal side. The multi-screen channel control server module is located on a server that provides a data service. The present invention has the advantages that the binding relationship maintenance and UI synchronization can be implemented on a newly added Websocket layer without affecting an original service, and stable service upgrade is achieved; and during the implementation of a Websocket channel on a client, multiplexing of the Websocket channel between pages is implemented in a nested iframe mode, thereby reducing the channel maintenance complexity.

## Description

### TECHNICAL FIELD

The present invention relates to the field of WEB technology, and more particularly to an apparatus and method for maintaining a connection channel in a multi-device interworking service; and in particular to an application scenario of interacting data between a WEB service and multiple devices.

### BACKGROUND OF THE INVENTION

Currently, a WEB service can already support various types of terminals, such as PCs, televisions, mobile phones with different resolutions and the like. While enjoying to utilize multiple terminals to access a service, people are no longer satisfied with using different terminals to separately access the same service system, but require the use of multiple terminals to perform an interworking service, thereby facilitating an operation of a user and enhancing viewing experiences.

A patent application No. 201310590251.5 discloses a "multi-screen interaction system and processing method thereof". In this system, a television system first initiates a multi-screen interaction service, and then searches other devices within the same Local Area Network (LAN) which initiate a multi-screen interaction and establishes communication therewith. The other devices then pushes their multimedia resources to the television system for presentation, and a user inputs a control instruction for the multimedia resources through the television system, then the television system converts the control instruction into a digital signal and sends it to the other devices, finally, the other devices convert the received digital signal into an operation instruction recognizable by the present devices, and perform a respective operation to the multimedia resources according to the operation instruction. A Chinese patent application No. 201210460776.2 discloses a "multi-screen interaction system and method", the system of which comprises a mobile electronic device and a display terminal. The mobile electronic device acquires an address of a web page, a picture or an audio-video displayed on a current interface, and transmits the address to the display terminal, which parses the address and displays a web page, a picture or an audio-video corresponding to the address according to the result of parsing, thereby implementing a multi-screen interaction. In this process, since the mobile electronic device only needs to transmit information of address without occupying larger bandwidth resources and has a fast transmission speed, it is advantageous to implement a real-time multi-screen interaction.

The above described two patents both relate to the implementations of UI synchronization and interworking operation between different types of terminals, but in the first patent, multimedia resources are needed to be pushed between the two terminals, which makes a higher demand on the connection bandwidth between terminals, moreover, the multimedia resources therein are only limited to the existing resources on the terminal devices and can't be selected; in the second patent, contents of the resources are no longer transmitted between terminals, but only the information of address is transmitted, which reduces pressure on the transmission bandwidth, but wherein, operations such as picture matching and adaptation are all completed at the terminals, thus making a very high demand on the processing capabilities of the terminals, and moreover, source information is divided into three types: pictures, web pages and videos, the data of these three types needs to be processed distinguishingly, resulting in complex service logics.

### SUMMARY OF THE INVENTION

An objective of the present invention lies in that in order to overcome the above problems, the present invention provides a system and method for maintaining a connection channel in a multi-device interworking service.

In order to achieve the above objective, the present invention provides a system for maintaining a connection channel in a multi-device interworking service, which comprises: a server and a terminal device configured to provide a data business, wherein the system comprises: a multi-screen channel control client module located on the terminal device and a multi-screen channel control server module located on the server;
the multi-screen channel control client module configured for acquiring an identification of a device terminal and reporting a binding relationship between the terminal and a multi-screen channel to a multi-screen channel control server;
the multi-screen channel control server module configured for recording the binding relationship between the terminal and the multi-screen channel and pushing a service to a bound terminal side.

Optionally, the multi-screen channel control server module comprises:
a channel maintenance unit configured for establishing and maintaining a Websocket channel between a multi-screen channel control client and the multi-screen channel control server;
a terminal binding unit configured for recording a binding relationship between clients;
a terminal adaptation unit configured for recognizing a device type of a terminal on which the client is located, and issuing a matched page address according to the device type.

In addition, the present invention provides a method for maintaining a connection channel in a multi-device interworking service, the above recited system for maintaining a connection channel, the method comprises:
step 101) maintaining a business channel for the terminal and adding a control channel for a multi-screen interworking service at the terminal device;
   implementing a binding, user interface UI synchronization and a status control between multiple terminal devices through the control channel, further implementing a separation between a business and a multi-device interworking control;
step 102) employing multiplexing of the control channel to implement a page jump in a multi-page application.

Optionally, the terminal device automatically loads a multi-screen channel control client module after a business page is loaded.

Optionally, the control channel is located between the multi-screen channel control client module and a multi-screen channel control server module, and the multi-screen channel control client module is located on the terminal device;
the multi-screen channel control client module establishes a Websocket channel, i.e., the control channel, with the multi-screen channel control server module, and reports a terminal identification of the client to the multi-screen channel control server module;
the multi-screen channel control server module is further configured for saving a correspondence between an identification of the terminal device and the Websocket channel.

Optionally, the multi-screen channel control client module sends a heartbeat message to the multi-screen channel control server module periodically through the Websocket channel to maintain the connection channel between the both.

Optionally, one multi-screen channel control client module carries an identification of a terminal device on which the other multi-screen channel client module is located to request the multi-screen channel control server module for a binding by way of scanning a QR code, the multi-screen channel control server module saves a binding relationship between two terminal devices; wherein a binding message is transmitted through the Websocket channel.

Optionally, the method for the user interface UI synchronization specifically comprises:
after the terminal device jumps to a new page, the multi-screen channel control client module located on the terminal device reports, to the multi-screen channel control server module located on a server, information about the page on which the terminal device is currently through the Websocket channel, the multi-screen channel control server module receives the information about the page on which the terminal device is currently and saves a correspondence between the terminal device and the information about the page on which the terminal device is currently;
the multi-screen channel control server module, after receiving the information about the page on which the terminal device is currently, reported by the multi-screen channel control client module, according to a capability and type of a browser of the terminal device, matches the type of the terminal sending a request from a terminal adaptation knowledge base and seeks whether there are other terminals bound with the terminal and whether the other terminals are on a page corresponding to the page on which the terminal is, if there is no bound terminal, then no processing is taken; if the other terminals have already been on the page corresponding to the page on which the terminal is, then no processing is taken; otherwise an address of a synchronous page of a terminal of a target type is acquired and pushed to the target terminal according to a synchronous relationship between a configuration and parameter of the target type in the request.

Optionally, the status control method comprises:
when the terminal device is a mobile phone-type terminal, and when the mobile phone-type terminal clicks to enter a play page, a terminal adaptation module pushes a video play page to a bound television-type terminal corresponding to the mobile phone-type terminal, while pushes a play control and recommendation page to the mobile phone-type terminal, in the recommendation page a control button for playing a video and a list of recommended programs corresponding to the video are included, wherein,
when the mobile phone-type terminal clicks the control button for playing a video, the multi-screen channel control client sends a corresponding control command to the multi-screen channel control server through the Websocket channel; a terminal binding module seeks the television-type client bound with the terminal and pushes the corresponding control command to the multi-screen channel control client on the terminal through the Websocket channel; the multi-screen channel control client on the television-type client receives the control command and performs actions, to control a video play;
when the mobile phone-type terminal browses the recommended programs in the play control and recommendation page and clicks to enter a page of details about the recommend programs, a terminal bound with the mobile phone-type terminal is controlled to jump to a corresponding page of details about programs through a UI synchronization mechanism.

Optionally, the step 102) specifically is: setting an iframe in a dom structure of a page of the multi-screen channel control client, embedding an original service page in the iframe, and creating and maintaining a Websocket channel with the multi-screen channel control server at outer layer of the iframe, and implementing a jump of a business page by refreshing the iframe.

Advantages of the present invention lies in that the binding relationship maintenance and UI synchronization is implemented on a newly added Websocket layer without affecting an original service, and stable service upgrade is achieved; and during the implementation of a Websocket channel on a client, multiplexing of the Websocket channel between pages is implemented in a nested iframe mode, thereby reducing the channel maintenance complexity.

### BRIEF DESCRIPTION OF THE DRAWINGS

Fig. 1 is a constitutional block diagram of an apparatus and method for maintaining a connection channel in a multi-device interworking service according to the present invention;
Fig. 2 is a schematic diagram of a binding flow in a multi-device interworking service according to the present invention;
Fig. 3 is a schematic diagram of a searching and playing flow in the multi-device interworking service according to the present invention;
Fig. 4 is a schematic diagram of a playing and controlling flow in the multi-device interworking service according to the present invention.

### DETAILED DESCRIPTION OF THE INVENTION

The apparatus and method for maintaining a connection channel in a multi-device interworking service according to the present invention will be set forth further below through specific embodiments.

The present invention provides an apparatus and method for maintaining a connection channel in a multi-device interworking service. The apparatus comprises: a multi-screen channel control client module located on a terminal device and a multi-screen channel control server module located on a server. The multi-screen channel control server module comprises a terminal adaptation unit, a terminal binding unit and a business processing unit. A basic principle of the present apparatus is that: the terminal device when logging in establishes a connection with the server and reports its own terminal identification, the server records a binding relationship between the identification of the terminal device and a multi-screen channel; the terminal device reports an identification of a terminal device to be bound by way of scanning a QR code, the server records a binding relationship between two terminal identifications; the terminal, after loading a new page, reports an address of the current page, the server seeks a bound terminal of the terminal and pushes a matched address; a mobile phone terminal, after performing an operation of play control, reports a control command through the multi-screen channel, the server receives and pushes the command to a bound television terminal thereof, realizing a control of a play process. The present invention adds a control channel for a multi-screen interworking service on a basis of the original business channel (i.e., a business channel between the server and the terminal device). The control channel establishes a connection between a client and a server through the Websocket technology. At the same time, a multiplexing of the control channel is implemented for a multi-page application, avoiding an overhead that channels are repeatedly established when a page jumps.

The present invention provides an apparatus and method for maintaining a connection channel based on dual channels of HTTP and Websocket in a multi-device interworking service, wherein:

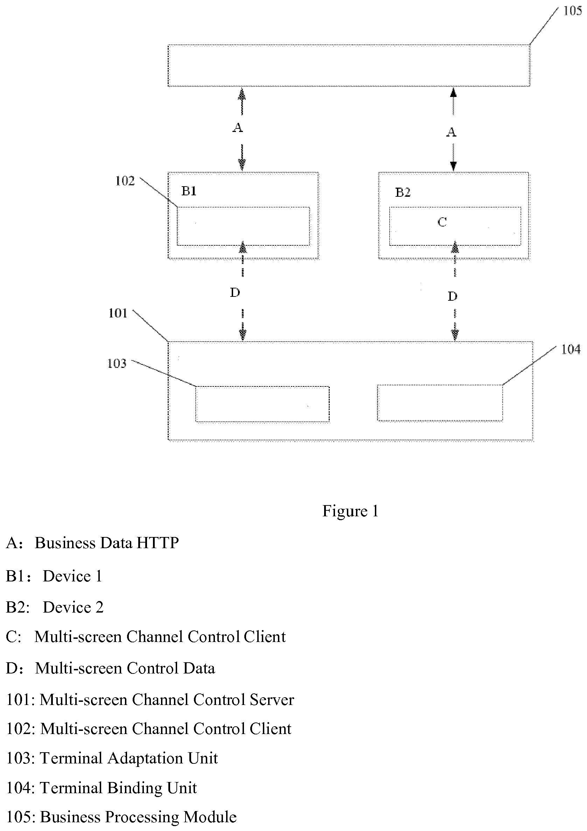

An apparatus for maintaining a connection channel in a multi-device interworking service shown in Fig. 1 comprises:
a multi-screen channel control server module 101 configured for completing functions of establishing and maintaining a Websocket channel, and filtering a terminal request, and implementing businesses such as a terminal binding, a terminal adaptation and a UI synchronization.
a multi-screen channel control client module 102 being a javascript client library which is added into a local browser to run when a terminal requests a business page. This component library maintains a two-way Websocket channel with the multi-screen channel control server, supports the multi-screen channel control server to push data to the terminal in real time, and responds and jumps according to the pushed content.

The above described multi-screen channel control server 101 further comprises:
a terminal adaptation unit 103 configured for recognizing information of a browser of the terminal and matching the most suitable terminal type according to an existing library of terminal types,
a terminal binding unit 104 configured for supporting a multi-terminal binding by way of scanning a QR code and maintaining an association relationship between the bound terminals.

The above described multi-screen channel control server module 101 and a business processing module 105 are both located on the server. Said server is used for providing a data business to the terminal device; the above described multi-screen channel control client module 102 is located on the terminal device; the business processing unit 105 responds to an original service request through a HTTP channel and remains an original business logic unchanged.

### Examples

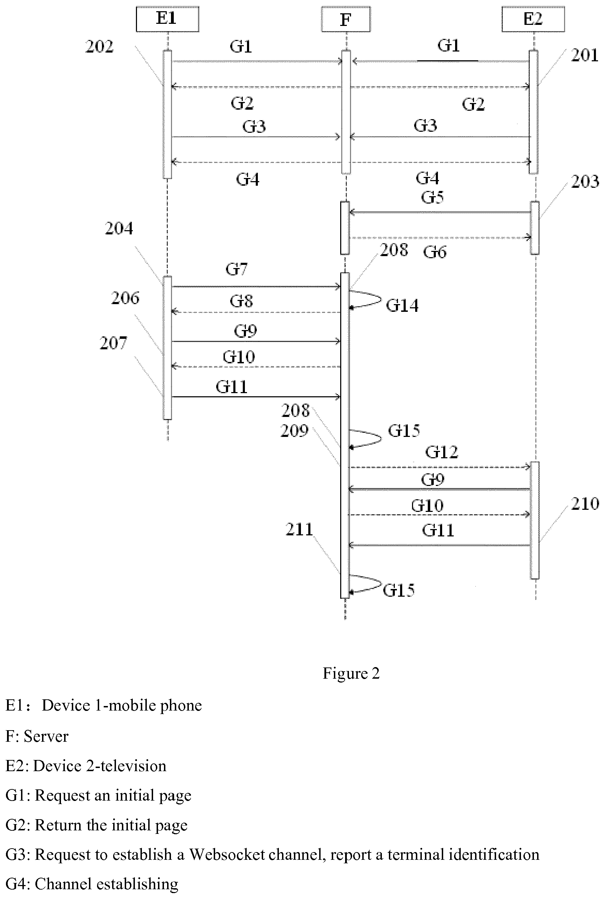

Fig. 2 is a diagram of a binding flow in a multi-device interworking service, which specifically comprises:
201) a television side initiates a multi-screen interworking application, requests an initial page, loads a multi-screen channel control client module, establishes a Websocket channel with a server and reports its own terminal identification. The server records a correspondence between the terminal identification and the Websocket channel, then proceeding to 202);
202) a mobile phone side initiates a multi-screen interworking application, requests an initial page, loads a multi-screen channel control client, establishes a Websocket channel with the server and reports its own terminal identification. The server records a correspondence between the terminal identification and the Websocket channel, then proceeding to 203);
203) the television side requests the server for a QR code scanning page through the HTTP channel, the server returns the QR code scanning page. Proceed to 204);
204) the mobile phone side reports an identification of a terminal to be bound to the server through the Websocket channel by way of scanning a QR code, then proceeding to 205);
205) a terminal binding module saves a binding relationship according to the terminal identification after receiving a terminal binding request, the server pushes an address of a search page to a mobile phone terminal through the Websocket channel, then proceeding to 206);
206) the mobile phone terminal receives the pushed address and request the server for the search page through the HTTP channel, the server returns the search page, then proceeding to 207);
207) the mobile phone side reports an address of a current page to the server through the Websocket channel after the search page is loaded, then proceeding to 208);
208) the server saves the address of the current page of the mobile phone side and seeks that a bound terminal thereof is a television side according to the terminal identification thereof, a terminal adaptation module judges whether the television side is on a corresponding page, if yes, then performing nothing; if not, then proceeding to 209);
209) the terminal adaptation module, according to the terminal type of the television side, obtains an address of a corresponding search page thereof, and pushes the address to the television side through the Websocket channel, then proceeding to 210);
210) the television side receives the pushed address, requests the server for the page through the HTTP channel, and reports an address of a current page to the server through the Websocket channel after the search page is loaded, then proceeding to 211);
211) the server saves the address of the current page of the television side and seeks that bound terminal thereof is a mobile phone side according to terminal identification thereof, the terminal adaptation module judges that the mobile phone side is being on a corresponding page.

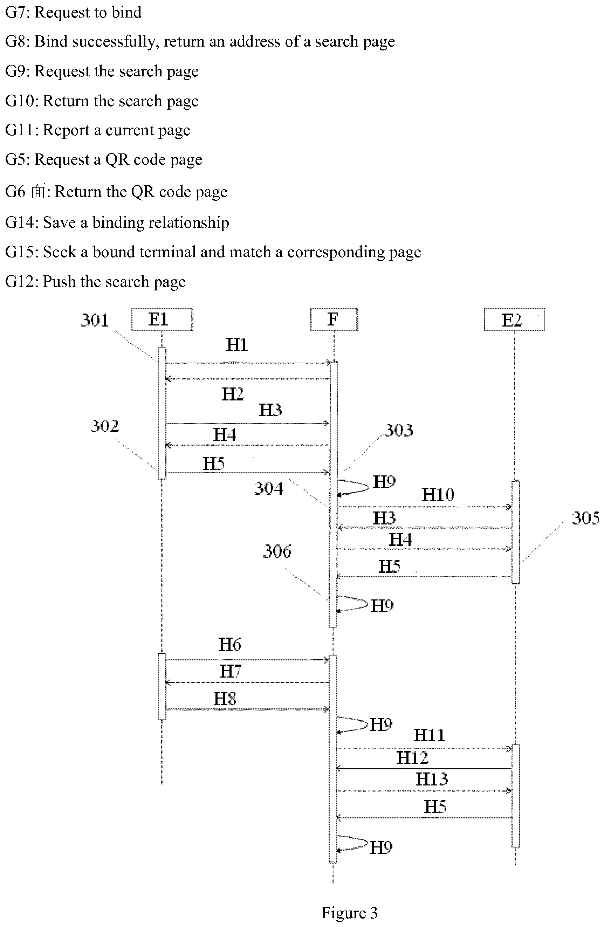

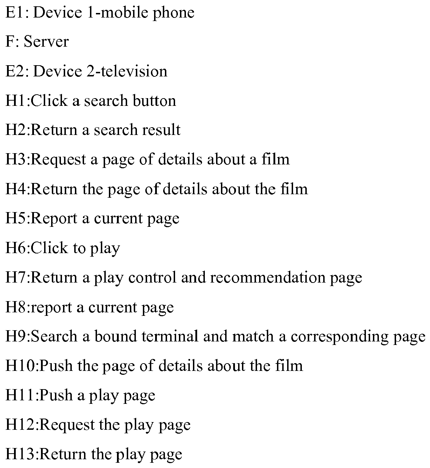

Fig. 3 is a flow diagram of a search interworking process in a multi-device interworking service, which specifically comprises:
301) the mobile phone side inputs a program abbreviation for searching, the server returns a search result through ajax and displays it at the mobile phone side, the mobile phone side selects a program and requests the server for a page of program details through the HTTP channel, the server returns the page of program details, then proceeding to 302);
302) the mobile phone side, after loading the page of program details, reports an address of a current page to the server, then proceeding to 303);
303) the server saves the address of the current page of the mobile phone side and seeks that a bound terminal thereof is a television side according to the terminal identification thereof, a terminal adaptation module judges whether the television side is on a page corresponding to the page of program details, if yes, then performing nothing; if not, then proceeding to 304);
304) the terminal adaptation module seeks, according to the terminal type of the television side, an address of a corresponding page of program details thereof, and pushes the address to the television side through the Websocket channel, then proceeding to 305);
305) the television side receives the pushed address, requests the page through the HTTP channel, and reports an address of a current page to the server through the Websocket channel after the page of program details is loaded, then proceeding to 306);
306) the server saves the address of the current page of the television side and seeks, according to terminal identification thereof, that a bound terminal thereof is the mobile phone side, the terminal adaptation module judges that the mobile phone side is being on a corresponding page.

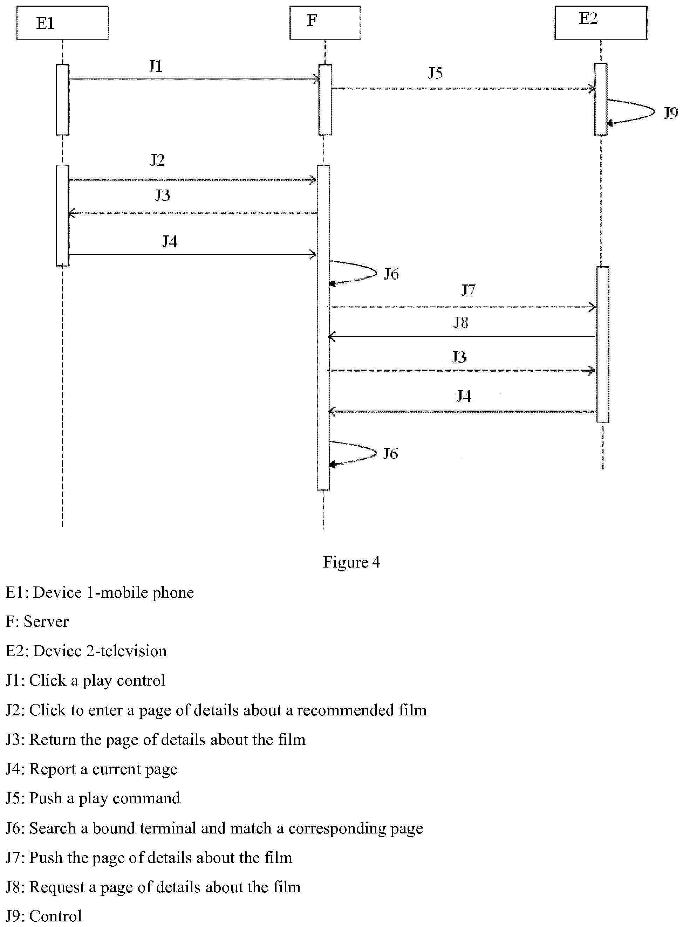

Fig. 4 is a flow diagram of a play interworking process in a multi-device interworking service, which specifically comprises:
401) when the television side and the mobile phone side synchronously display the page of program details, the mobile phone side selects a program source and a program episode number in the page of details, clicks to play, and requests the server for a play control and recommendation page corresponding to the program through the HTTP channel, the server returns the play control and recommendation page corresponding to the program to the mobile phone side, then proceeding to 402);
402) the mobile phone side reports an address of a current page to the server through the Websocket channel after loading the play control and recommendation page, then proceeding to 403);
403) the server saves the address of the current page of the mobile phone side and seeks that a bound terminal thereof is the television side according to the terminal identification thereof, a terminal adaptation module judges that the corresponding page of the bound television terminal thereof is a play page, and judges whether the bound television terminal thereof is on the play page, if yes, then performing nothing; if not, then proceeding to 404);
404) the terminal adaptation module seeks, according to the type of the television side, an address of a corresponding play page thereof, and pushes the address to the television side through the Websocket channel, then proceeding to 405);
405) the television side receives the pushed address, requests a corresponding page through the HTTP channel, and begins to play a corresponding program after the play page is loaded;
406) the mobile phone side clicks operation buttons such as pause, play, fast forward, fast backward and the like in the play control and recommendation page, to send a corresponding instruction to the server through the Websocket channel, then proceeding to 407);
407) the server receives a play control instruction from the mobile phone side, and seeks whether the terminal is bound with the television terminal, if not, then performing nothing; if yes, then proceeding to 408);
408) the server pushes the play control instruction to the television side through the Websocket channel, to control the playback of the television terminal;
409) the mobile phone side browses a recommended content corresponding to the program in the play control and recommendation page, chooses a certain recommended program, and requests the server for a page of program details about the program through the HTTP channel, the server returns the page of program details, then proceeding to 410);
410) the mobile phone side reports an address of a current page to the server through the Websocket channel after loading the page of program details, then proceeding to 411);
411) the server saves the address of the current page of the mobile phone side and seeks that a bound terminal thereof is the television side according to the terminal identification thereof, the terminal adaptation module judges, according to the type of the television terminal, whether the television terminal is on a page corresponding to the page of program details, if yes, then performing nothing; if not, then proceeding to 412);
412) the server seeks an address of the page of program details corresponding to the television side, and pushes the address to the television side through the Websocket channel, then proceeding to 413);
413) the television side receives the pushed address, requests a corresponding page through the HTTP channel, and reports an address of a current page to the server after the page of program details is loaded, then proceeding to 414);
414) the server saves the address of the current page of the television side and seeks that a bound terminal thereof is a mobile phone side according to the terminal identification thereof, the terminal adaptation module judges, according to the terminal type of the mobile phone side, that the mobile phone side is being on a corresponding page.

In a word, the present invention proposes a system and method for maintaining a connection channel in a multi-device interworking service. With this method, a control channel for a multi-screen interworking service may be added on a basis of not affecting an original business logic, and a binding, UI synchronization and status control between multiple devices may be implemented through the control channel.

The method of the present invention differs from other methods for maintaining a channel in that:
1) a control channel for a multi-screen interworking service is added without affecting a service channel for an original business, and a binding, an UI synchronization and a status control between multiple devices may be implemented through the control channel, thereby achieving a separation between the original business and the multi-device interworking service.
2) After an initial page is loaded, the terminal automatically loads a multi-screen channel control client, establishes a Websocket connection with a multi-screen channel control server, and reports a terminal identification of the client; the multi-screen channel control server saves a correspondence between the terminal identification and the Websocket channel.
3) The multi-screen channel control client sends a heartbeat message to the multi-screen channel control server periodically through the Websocket channel to maintain the connection channel between the both.
4) The multi-screen channel control client may carry a terminal identification of another client to request the multi-screen channel control server for a binding by way of scanning a QR code, a binding message is transmitted through the Websocket channel, a terminal binding module saves a binding relationship between two terminals after receiving a binding request.
5) The multi-screen channel control client, after jumping to a new page, reports information about a current page to the multi-screen channel control server through the Websocket channel, the multi-screen channel control server receives the information about the current page of the terminal and stores a correspondence between the terminal and the information about the current page.
6) After the multi-screen channel control server receives the information about the current page reported by the terminal, a terminal adaptation module, according to the capability and type of a browser of the terminal, matches the type of the terminal sending a request from a terminal adaptation knowledge base, seeks whether there are other terminals bound with the terminal and whether the other terminals are on a page corresponding to the page on which the terminal is, and if there is no bound terminal, then no processing is taken; if the other terminals have already been on the page corresponding to the page on which the terminal is, then no processing is taken; otherwise an address of a synchronous page of a terminal of a target type is acquired and pushed to the target terminal according to a synchronous relationship between a configuration and parameter of the target type in the request.
7) When a mobile phone-type terminal clicks to enter a play page, the terminal adaptation module pushes a video play page to a corresponding bound television-type terminal thereof, while pushes a play control and recommendation page to the mobile phone-type terminal, in the page a control button for playing a video and a list of relevant recommended programs corresponding to the video are included, wherein,
   when the mobile phone-type terminal clicks the control button for playing a video, the multi-screen channel control client sends a corresponding control command to the multi-screen channel control server through the Websocket channel; a binding module seeks the television-type client bound with the client and pushes the corresponding control command to the client through the Websocket channel; the television-type client receives the control command and performs actions, to control a video play.
   When the mobile phone-type terminal browses a recommended program in the play control and recommendation page and clicks to enter a page of details about a certain recommend program, a terminal bound with the mobile phone-type terminal is controlled to jump to a corresponding page of program details through a UI synchronization mechanism of 5) and 6).
8) An iframe is contained in a dom structure of a page of the multi-screen channel control client, an original service page is embedded in the iframe, a Websocket channel with the server is created and maintained at the outer layer of the iframe, and a jump of a business page is implemented by refreshing the iframe.
9) A business processing module responds to an original business request through an HTTP channel and remains an original business logic unchanged.

Finally, it should be noted that the aforementioned embodiments are only used for illustrating, rather than limiting the technical solution of the present invention. Although the present invention has been described in detail with reference to the embodiments, those skilled in the art will understand that modifications or equivalent substitutions can be made to the technical solution of the present invention without departing from the scope and spirit of the technical solution of the present invention, and thereby should all be encompassed by the claims of the present invention.

## Claims

1. A system for maintaining a connection channel in a multi-device interworking service, which comprises a server and a terminal device configured for providing a data business, wherein the system comprises: a multi-screen channel control client module located on the terminal device and a multi-screen channel control server module located on the server;
the multi-screen channel control client module configured for acquiring an identification of a device terminal and reporting a binding relationship between the terminal and a multi-screen channel to a multi-screen channel control server;
the multi-screen channel control server module configured for recording the binding relationship between the terminal and the multi-screen channel and pushing a service to a bound terminal side.

2. The system for maintaining a connection channel in a multi-device interworking service according to claim 1, wherein the multi-screen channel control server module comprises:
a channel maintenance unit configured for establishing and maintaining a Websocket channel between a multi-screen channel control client and the multi-screen channel control server;
a terminal binding unit configured for recording a binding relationship between clients;
a terminal adaptation unit configured for recognizing a device type of a terminal on which the client is located, and issuing a matched page address according to the device type.

3. A method for maintaining a connection channel in a multi-device interworking service, which is based on the system for maintaining a connection channel recited in any one of claims 1-2, the method comprises:
step 101) maintaining a business channel for the terminal and adding a control channel for a multi-screen interworking service at the terminal device;
implementing a binding, user interface UI synchronization and a status control between multiple terminal devices through the control channel, further implementing a separation between a business and a multi-device interworking control;
step 102) employing multiplexing of the control channel to implement a page jump in a multi-page application.

4. The method for maintaining a connection channel in a multi-device interworking service according to claim 3, wherein the terminal device automatically loads a multi-screen channel control client module after a business page is loaded.

5. The method for maintaining a connection channel in a multi-device interworking service according to claim 4, wherein the control channel is located between the multi-screen channel control client module and a multi-screen channel control server module, and the multi-screen channel control client module is located on the terminal device;
the multi-screen channel control client module establishes a Websocket channel, i.e., the control channel, with the multi-screen channel control server module, and reports a terminal identification of the client to the multi-screen channel control server module;
the multi-screen channel control server module is further configured for saving a correspondence between an identification of the terminal device and the Websocket channel.

6. The method for maintaining a connection channel in a multi-device interworking service according to claim 5, wherein the multi-screen channel control client module sends a heartbeat message to the multi-screen channel control server module periodically through the Websocket channel to maintain the connection channel between the both.

7. The method for maintaining a connection channel in a multi-device interworking service according to claim 5, wherein one multi-screen channel control client module carries an identification of a terminal device on which the other multi-screen channel client module is located to request the multi-screen channel control server module for a binding by way of scanning a QR code, the multi-screen channel control server module saves a binding relationship between two terminal devices;
wherein a binding message is transmitted through the Websocket channel.

8. The method for maintaining a connection channel in a multi-device interworking service according to claim 5, wherein the method for the user interface UI synchronization specifically comprises:
after the terminal device jumps to a new page, the multi-screen channel control client module located on the terminal device reports, to the multi-screen channel control server module located on a server, information about the page on which the terminal device is currently through the Websocket channel, the multi-screen channel control server module receives the information about the page on which the terminal device is currently and saves a correspondence between the terminal device and the information about the page on which the terminal device is currently;
the multi-screen channel control server module, after receiving the information about the page on which the terminal device is currently, reported by the multi-screen channel control client module, according to a capability and type of a browser of the terminal device, matches the type of the terminal sending a request from a terminal adaptation knowledge base and seeks whether there are other terminals bound with the terminal and whether the other terminals are on a page corresponding to the page on which the terminal is, if there is no bound terminal, then no processing is taken; if the other terminals have already been on the page corresponding to the page on which the terminal is, then no processing is taken; otherwise an address of a synchronous page of a terminal of a target type is acquired and pushed to the target terminal according to a synchronous relationship between a configuration and parameter of the target type in the request.

9. The method for maintaining a connection channel in a multi-device interworking service according to claim 3, wherein the status control method comprises:
when the terminal device is a mobile phone-type terminal, and when the mobile phone-type terminal clicks to enter a play page, a terminal adaptation module pushes a video play page to a bound television-type terminal corresponding to the mobile phone-type terminal, while pushes a play control and recommendation page to the mobile phone-type terminal, in the recommendation page a control button for playing a video and a list of recommended programs corresponding to the video are included, wherein,
when the mobile phone-type terminal clicks the control button for playing a video, the multi-screen channel control client sends a corresponding control command to the multi-screen channel control server through the Websocket channel; a terminal binding module seeks the television-type client bound with the terminal and pushes the corresponding control command to the multi-screen channel control client on the terminal through the Websocket channel; the multi-screen channel control client on the television-type client receives the control command and performs actions, to control a video play;
when the mobile phone-type terminal browses the recommended programs in the play control and recommendation page and clicks to enter a page of details about the recommend programs, a terminal bound with the mobile phone-type terminal is controlled to jump to a corresponding page of details about programs through a UI synchronization mechanism.

10. The method for maintaining a connection channel in a multi-device interworking service according to claim 3, wherein the step 102) specifically is: setting an iframe in a dom structure of a page of the multi-screen channel control client, embedding an original service page in the iframe, and creating and maintaining a Websocket channel with the multi-screen channel control server at outer layer of the iframe, and implementing a jump of a business page by refreshing the iframe.
